(19) Europäisches Patentamt
European Patent Office
Office européen des brevets

(11) **EP 2 848 591 B1**

(12) **EUROPEAN PATENT SPECIFICATION**

(45) Date of publication and mention
of the grant of the patent:
**01.07.2020 Bulletin 2020/27**

(51) Int Cl.:
***C02F 1/48*** *(2006.01)*  *F02M 27/04* *(2006.01)*

(21) Application number: **14003083.4**

(22) Date of filing: **08.09.2014**

(54) **Process and apparatus for the treatment of fluids by means of electrical induction**

Verfahren und Vorrichtung zur Behandlung von Fluiden mit Hilfe von elektrischer Induktion

Procédé et dispositif de traitement de fluides au moyen de l'induction électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2013 BE 201300587**

(43) Date of publication of application:
**18.03.2015 Bulletin 2015/12**

(73) Proprietor: **AQwaTech bvba
8480 Bekegem (BE)**

(72) Inventor: **VAN WELDEN Paul
9420 Erpe-Mere (BE)**

(74) Representative: **Theunis, Patrick
Patrick's Patents BVBA
Langbosweg 19
2550 Kontich (BE)**

(56) References cited:
**EP-A1- 1 676 815       EP-A1- 2 364 954
EP-B1- 2 054 347       WO-A1-00/28111
WO-A1-2012/167363     FR-A1- 2 882 745
US-A1- 2005 121 396**

Remarks:
The file contains technical information submitted after the application was filed and not included in this specification

## Description

The present invention relates to a method and apparatus for the treatment of liquids. More in particular this invention relates to a method and an apparatus for the treatment of water or fuel by means of electrical induction.

## BACKGROUND OF THE INVENTION :

It's known that the qualities of fluids and gasses can be influenced by an applied electromagnetic field. Such treatment cause changes of physic-chemical, biological and/or structural character.

The European patent applications EP 1 676 815, EP 2 364 954, EP 2 054 347 as well as the US patent application US 2009/0218225 describe examples of such treatment. The effects described therein do not meet the expectations to become a global favorable effect for example on the quality of the treated water.

## DISCUSSION OF THE PRIOR ART CITED :

In the examination report of the Belgian patent application nr BE 2013/0587, filed on the date of 9 September 2013, the priority whereof is called upon by the present European Patent application, seven different documents have been cited. The present invention is in many ways different and inventive against the content of these documents as discussed below.

## WO 00/28111 A1 (Malato APS (DK); Jensen Lasse Finn (DK); Stoltze Svend Tommas Wess (DK) 18 May 2000).

First of all the objective of the mentioned patent is different from our objective, namely the prevention of the growth of organic material on the outside of a boat under water.

One speaks of a created magnetic flux which creates a homogeneous field, in one great flat surface and in an 'under water' situation. Claim 2 even mentions permanent magnets.

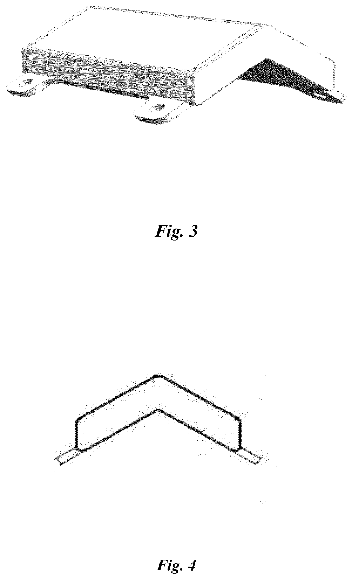

One speaks of a 'repetitive' pattern in conclusion 7. Yet, the design of the mentioned pattern in fig 4, is quite different from our very specific shape.

The apparatus according to the present invention creates an electric field which is not at all homogeneously build but follows a very specific shape. As such, there is a clear difference in objective and buildup of the apparatus.

## US 2005/121396 A1 (Kosakewich Darrell S (CA) 9 June 2005.

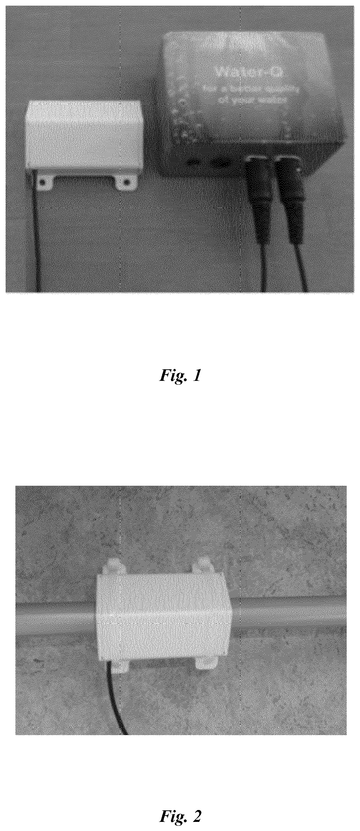

The design of the mentioned apparatus in figure 1 and 2 is nowhere consistent with our approach. The technical implementation is totally different.

## FR 2 882 745 A1 (Arcange & sarl (FR), 8 September 2006.

The design of the mentioned apparatus in figure 3 is nowhere consistent with our approach. One speaks of 3 different classic coils (page 7 , 'bobinages'). As such, the technical implementation is totally different.

## WO 2012/167363 A1 (Gemme Paul (CA)) 13 December 2012.

The mentioned apparatus uses 4 different techniques as mentioned in claim 1, a water filter, an ion ionizator, a magnetization unit and an ozone generator. Furthermore one speaks of a required pump (claim 2). The mentioned schematics shows no comparison to our specific design. As such, the technical implementation is totally different.

## EP 1 676 815 A1 (Planet Horizons Technologies S (CH)) 5 july 2006.

The mentioned apparatus creates a signal with a specific stamp. The electromagnetic field is created by multiple coils, in the classic form of a coil. Or this coil is around the medium, as such the water flows through the coil, or they install the coils in a water tank.

Our apparatus has no classic coil around the medium, a water tube. On the contrary, the shape is such that it can be installed on the outside of any water tube, without the need to cut the water tube which is required in their design.

Furthermore, although we use an electromagnetic signal, by our specific approach and design there is left only an electrical induction, and no magnetical induction as used in the mentioned apparatus.

Note that they use in the practical implementation of their apparatus a 'whirl utility' and that the service pipe needs to be cut to be able to install the apparatus in the service pipe.

## EP 2 364 954 A1 (Planet Horizons Technologies SA (CH)) 14 September 2011.

The mentioned schematics shows no comparison to our specific design. As such, the technical implementation is totally different.

## EP 2 054 347 B1 (Hydropath Holdings Ltd, (GB) 2 November 2011.

The mentioned schematics show a system which is based on a classic coil around the medium. Our apparatus installs on the medium, not around the medium. Furthermore, there is no comparison to our specific design. As such, the technical implementation is totally different.

## Statement of invention :

The aim of the present invention is to provide a solution to the drawbacks abovementioned and other disadvantages by the provision of an improved apparatus and method for the treatment of liquids. To that end the invention relates to an apparatus according to claim 1 for the treatment of a liquid, comprising a plastic housing for a printed circuit board, positioned alongside a transfer channel for the liquid, said printed circuit board containing two distinct antenna parts for receiving electromagnetic signals from a steering unit, transforming same into electromagnetic inductive signals acting upon the liquid, one antenna part being an antenna in the form of a coil, executed in a meander layout, and another antenna part, characterized in that the other antenna part of the printed circuit board comprises holes, these holes are arranged according to a pattern comprising at least two blocks, each blocks comprising a matrix of holes arranged in rows and columns, wherein the holes in the rows are positioned at regular distances from one another, wherein the blocks are displaced over one another and wherein the holes are carried out by electrical conducting connections passing through the holes in the printed circuit board whereby the inside of the holes are metalized.

For the sake of simplicity of the description the apparatus as abovementioned will be denoted in the remainder of this description as induction apparatus or induction unit.

The present invention also relates to a method for the treatment of fluids by using the abovementioned apparatus. More in particular the invention comprises the methods and apparatus as set forth in the appended claims.

## SHORT DESCRIPTION OF THE DRAWINGS

With the intention to demonstrate clearly the characteristics of the invention, hereinafter, as an example without any limitative character, some preferred embodiments are described of an improved apparatus or device according the invention, with reference to the following drawings, wherein:

> Figure 1 shows a photo of the device according to the invention, comprising the steering unit and the induction unit.
> Figure 2 shows a photo of the induction unit, as installed on a water tube.
> Figure 3 shows a schematic illustration in perspective view of the induction unit as it can be installed across a water tube.
> Figure 4 shows a cross-section of the induction unit.
> Figure 5 is a schematic representation of the pattern according to which the holes can be placed.
> Figure 6 shows a photo of such pattern implemented in a real PCB design.
> Figure 7 reflects the schematic structure of the pattern.

## DESCRIPTION OF THE INVENTION

### Scope :

In the following description the operation and the result of the method of the apparatus according the invention is illustrated on water, more particularly tap water. The invention is equally well applicable on any other fluid, as well as on gasses. When applied to fuels, both petrol and diesel, a saving of the fuel is noticed.

When applied to tap water, the apparatus transforms the water in a more tasty, softer and more vital water.

### General structure :

The apparatus according to the invention essentially consists of an induction unit or induction module, which for that purpose receives signals from a steering unit, which is feeded by an electrical power supply.

In practice, the whole device according to the invention is offered on the market in a form that contains the following 3 parts: a power supply, a steering unit and an induction unit stricly speaking.

As power supply one may use for example a regular 9 Volt supply.

Figure 1 shows an exemplary embodiment on the left side of the induction unit, and on the right side the steering unit, with a label Water-Q.

The steering unit generates or sends a very specific low frequency electromagnetic signal to the induction unit.

A low frequency electromagnetic signal as used in the current invention should be understood as a signal with a frequency in the so called VLF (Very Low Frequency) frequency band, as known by the person skilled in the art.

### Induction unit:

The induction unit or module converts this signal into an electromagnetic field, which is induced in the fluid to be treated, as example tap water.

The induction unit for this purpose contains one or more printed circuit boards.

In a preferred embodiment the induction unit contains for example two printed circuit boards, which are both in a plastic housing in the form of a V positioned over the water tube. It is important that the induction unit is built in a form as such that it's not required to fit completely around, but only partly around the water tube .

This facilitates essentially the installation of the module. Look for the schematic illustration in perspective view of the induction unit in figure 3.

Each 'leg' or side of the V-shape induction module contains one or non-identical printed circuit board.

In more general terms the induction module provides for an induction of whether or not an external signal in the medium, which is a fluid or a gas (inclusive air and oxygen).

This whether or not external signal may be electrical in nature.

This external signal coming from the steering unit is then delivered to the induction unit printed circuit board.

The induction module can be used with all fluids and all gasses (as such inclusive of air and oxygen).

The fluid and/or gas can be either stationary or in motion.

The induction module may be located either in the fluid and/or gas or outside of it. The assembling of the induction unit relative to the service pipe can be at any form or angle.

A preferred embodiment consists for example in that there is a liquid in the service pipe and that the induction unit is located just besides the service pipe.

Any external conductors can for example send an electromagnetic signal to the printed circuit board, which at one side contains an antenna, in the form of a meander on the printed circuit board, and on the other hand contains holes, as placed in a pattern as described as follows.

The holes usually take the form of a point or a circle.

The whole of the induction module induces then this possibly external signal into the liquid and/or gas.

Tests have shown that one obtains very specific induction patterns in the liquid and/or gas with this induction module. According to the invention the meander antenna and the holes are installed together on one printed circuit board.

**Printed Circuit Board :**

A printed circuit board is known also as a PCB, which is used for the purpose of the present invention. This printed circuit board may be carried out in different embodiments; it may contain one or more layers, whereby a four layer embodiment is preferred. At such a four layer design there is a top and bottom layer, and two layers inside the printed circuit board.

This printed circuit board contains two distinct parts: in one part there is the antenna in the form of a coil, executed in a meander layout, and the other part contains the holes, placed in a pattern throughout the printed circuit board.

This pattern consists of holes, which are placed in a specific pattern into the printed circuit board.

As mentioned above these holes in the printed circuit board are placed in a pattern containing one or more blocks, each of these blocks contains one or more rows whereby the holes are placed at a regular distance of each other in each row, and whereby the blocks are in each case displaced relative to each other. In a preferred embodiment this displacement amounts to at least the thickness of one hole.

By the thickness of one hole in the context of the present invention should be understood: in the case the hole is round or circular, the diameter of such hole.

In the case the hole has any other form, for example a square, pentagonal, hexagonal or rectangular, the equivalent diameter.

This equivalent diameter is defined as the diameter of a circle which has the same surface as the other form, as example the square, pentagonal, hexagonal or rectangular hole.

The vitalizing effect on the fluid that flows through the service pipe whereupon the induction unit is mounted, is obtained by the synergetic effect caused by the induction created by the antennas on the printed circuit board, and influenced by the pattern of holes applied in the same printed circuit board.

**Pattern of the induction module :**

For the purpose of the present invention the pattern or figure of the induction module is of primary importance.

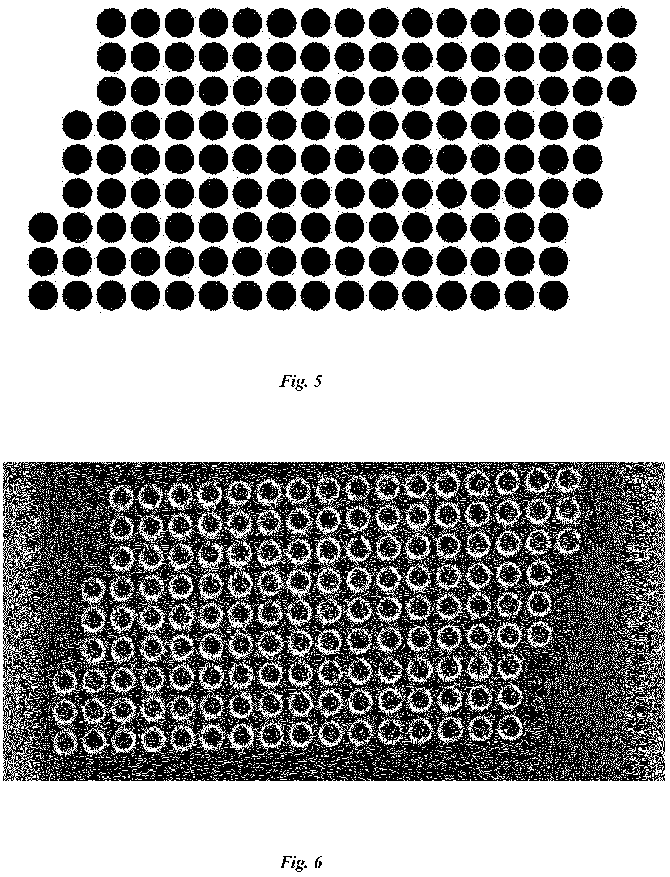

In a preferred embodiment of the invention this pattern contains three rows, whereby each row contains sixteen holes, one above the other, and this rectangular pattern of holes is then three times repeated, whereby these three stacked blocks of 3 x 16 holes indent with the size of one hole to the right relative to each other indention. This principle is clearly illustrated in figure 5.

An effective embodiment of this pattern in a real printed circuit board is shown in figure 6.

Further information about this pattern as built by such holes, is given below:

One hole preferably consists of a circle with a diameter R;

The maximum value of R is 10 m;
The maximum value of R is 1nm (nanometer).

With regard to the distance between two holes, called A :

This distance A is preferably equal in both horizontally in one row as vertically between two holes in rows positioned above one another.

Distance A is optimum equal to the $4^{the}$ PHI relation of R time R 1/1,61803/1,61803/ 1,61803/1,61803 = 0,145

$$A = R \times 0,145$$

The maximum value of A is 100 x R;
The maximum value of A is 0,001 x R.

With regard to the number of holes in one row : a horizontal row with a number of holes one behind the other with each time a distance A in between, called N:

The preferred value of N is 16;
The maximum value of N is 100;

The minimum value of N is 3.

With regard to the number of horizontal rows one above the other, called X:

The preferred value of X is 3;
The maximum value of X is 10;
The minimum value of X is 1.

With regard to the number that the above pattern is repeated, called P :

The preferred value of P is 3;
The maximum value of P is 10;
The minimum value of P is 1.

With regard to the indentation or indent between two consecutive patterns of X (preferably 3), called I:

The preferred value of I is 1;
The maximum value of I is 10:
The minimum value of I is 1.

The above described pattern can be built as follows:

One starts with the bottom left hole 1;
hole 2 is at the right side of hole 1 at a distance A;
until 16 holes on row 1, holes 1 to 16.

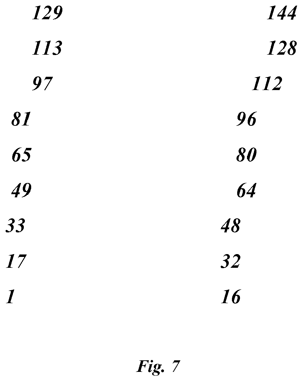

Row 2 is just above row 1, holes 17 to 32. Row 3 is just above row 2, holes 33 to 48.
Row 4 is just above row 3, with a preferred indent of one hole. As such, one starts with hole 49 at the position of hole 34, holes 49 to 64.
Row 5 is just above row 4, holes 65 to 80. Row 6 is just above row 5, holes 81 to 96.
Row 7 is just above row 6, with a preferred indent of one hole. As such, one starts with hole 97 at the position of hole 82, holes 97 to 112.
Row 8 is just above row 7, holes 113 to 128. Row 9 is just above row 8, holes 129 to 144.
Application of the above gives a total view of the holes according to the numbering scheme as shown in figure 7.
A particularly preferred embodiment of the holes pattern contains three blocks of each three rows with each sixteen holes, which gives a total of 144 holes (3 x 3 x 16 = 144), whereby these three blocks in each case are spatially displaced relative to each other with a distance equal to one time the distance between two holes in one row.

**Combined effect of the antenna and the holes on the printed circuit board :**

As described above, there are two distinct components on the printed circuit board of the induction unit according to the invention.
On the one hand the printed circuit board contains an antenna known as such, in the form of a electromagnetic meander form well-known in the prior art, which generates an induction field in the fluid to be treated.
Examples of such meander forms are described in the European patent application Nr. EP 2 364 954 A1, in the name of Planet Horizons Technologies S.A., Sierre, Switzerland, published 14 September 2011.
In particular in this application reference is made to figures 2 and 3 that show examples of antennas on a printed circuit board, as used for the treatment of fluids. The second component on the printed circuit board is formed by the above described pattern of holes, which in itself can be considered as a specific antenna meander shape, and which itself generates an electromagnetic field when it is steered by an electromagnetic signal.
This second field in a certain sense is complementary or supplemental to the field of the 'classic' antenna.
Although the explanation as presented below is not exhaustive for the operation of the apparatus according to the invention, the inventors are of the opinion that the scientific effect of the combined usage of the 'classic' meander antenna and the holes pattern on the printed circuit is as follows:
The classic electromagnetic meander antenna generates a classical induction field, and delivers as such a 'hard' effect on the fluid, as for example tap water.
The second component on the printed circuit board in the form of the above described holes pattern, generates, in turn, a quantum effect which softens the mentioned 'hard' effect.
The result of the interplay of both components provides the surprising effect on the properties of the treated fluid.
In the case of tap water this is for example the richer and smoother taste.
In the case of fuel this leads to a higher energy value, and as such to a lower fuel consumption. Both in the case of petrol as diesel fuel.

**Technical description of the materials :**

The holes can be made of an electrically conductive material.
The spacing's A can be made of an electrically conductive material.
The holes can be whether or not connected to each other through an electrically conductive material.

**Embodiments :**

Variant A : version with an electrically **conductive** material.

As for example carried out in copper on a PCB (printed circuit board).

These are the so called PAD's, with or without a hole, or the so called VIA's, between one side of the PCB and the other side of the PCB.

The terms PAD and VIA's in the context of the present invention are known by the person skilled in the art. This means a way (from the Latin 'via') or small hole, where through an electrical connection between the different layers in a PCB is created. In this case, the electrical connection is complete through the whole PCB.

They provide in turn an electrical inductive effect on the treated fluid which is complementary to the induction field created by the meander antenna.

These VIA's and/or PAD's are whether or not connected with a copper conductor. This conductor can connect one or more VIA's and/or PAD's together and whether or not with an external conductor.

On this external conductor is connected whether or not an electrical signal.

The above mentioned VIA's and/or PAD's are by preference round or circular, however a square, pentagonal, hexagonal or rectangular form is not excluded a priori.

A PCB can have one or more layers. Typical numbers are between 2 and 8 layers, however bigger quantities (M) are technically also possible. There may therefore be more M layers with holes lying under each other, whether or not inside the PCB. These multiple layers can be connected with each other through the standard interlayer PCB techniques. In the case of three or more layers, as from the third layer they are all inside the PCB.

As such, hole 1 on layer 1 can whether or not be connected with hole 1 on layer 2, and with hole 1 on layer M.

The holes can also be in an non conductive material, and the spacing A between them can be in a conductive material. For example in copper as on a PCB. Thus the reverse embodiment of the method shown above.

There can be as well more layers under each other in a PCB.

As well the holes as the spacing A in between can be in an electrical conductive material. This material can be the same for both, as example copper.

Or this conductive material is different between them, as for example the hole is in copper and the spacing A is in nickel.

As well in this case, there could be more layers under each other, whether or not separated with a whether or not insulating layer.

Variant B : version with **non-conductive** material.

The hole and the spacing A are in different non-conductive materials, for example the hole is in grapheme and the spacing A is in some kind of plastic, as such with different qualities.

There can be more layers under each other, whether or not separated with an conductive layer.

**Installation of the device :**

One of the real benefits of the apparatus according to the invention, is that it can be installed or fitted on a water tube without the need of an intervention by a professional, for example a plumber.

The first step is the installation of the induction unit on the water tube.

The recommended location of this installation in a regular house is just after the water meter.

Preferably the cable connection is positioned in the direction from where the water flows.

The induction unit or module can for example be mounted around the water tube with the help of two tie-wraps.

Then the cable from the induction module is connected to the steering unit in the appropriate connector.

Preferably this cable is connected on the steering unit before one connects the power supply to the outlet.

According to a preferred embodiment of the apparatus according to the invention, it's provided with a means for indication of its operation, for example an indicator containing for example a LED light fixture.

This will then light up greeny or flashy, by way of illustration that the device is working properly.

**Effects of the device on the treated water :**

It's known that pure water is what people think they need. Very pure water can be obtained, for example, by distillation. Exclusive drinking of distilled water is however not sufficient to survive, among other things because there is no trace of minerals in the water anymore. And as known, minerals contribute to the building blocks of the human body.

What the body really needs is water that through a specific treatment obtains a supplemental vitalizing character. Such vitalized water is for example characterized by a smaller cluster structure, so it can more easily en more deeply penetrate into the physical body, and as such provides a better and smoother movement of the water in the body.

The apparatus according to the invention provides such 'vitalized' water.

In addition, it's suspected that water has also a kind of memory, or at least carries the traces of earlier treatments and pollutions.

The water crystal photo's of Masaru Emoto illustrates for example this effect (reference http://masaru-emo-

to.net/english/index.html).

In the treated water by the apparatus according to the invention these older energetic imprints have been erased or removed.

Concerning the effects of the apparatus on the presence of lime and/or limestone in the treated water: the inventors suspect that the limestone as such remains in the water, however in a much more soften form, making it less detrimental and much easier to remove if required.

Although the scientific impact of the electrical induction generated by the apparatus according the invention on the fluid is not fully known yet, the inventors believe that due to the electrical induction the tension on, and between, the water molecules increases.

This allows the relatively loose water molecules relative to each other to restructure and the cluster structure of the water molecules breaks off or reduces at least. The previously stored energetic information of the water dissolves in this way.

The inventors have tested the effect of the apparatus as such: two equal tray's filled with watercress sprouts are irrigated on the one hand with regular tap water, and on the other hand with water treated by the apparatus according to the invention.

It has been found that the watercress irrigated with the water treated by the apparatus according to the invention has grown stronger than the equal tray watercress irrigated with regular tap water.

**Advantages of the invention :**

The benefits of the device according to the invention are situated on different levels: on ecological level, on economical level and on technical level.

The ecological benefits comprise, among other things, the fact that when using the device according to the invention there is no need any more for plastic or glass water bottles, because the treated tap water is more tastier, softer and fuller of taste and has as well a more vital and rejuvenated character.

In short, the ecological footprint decreases essentially by using the apparatus according to the invention.

The economical benefits express themselves in the fact that there is no need of any (paying) maintenance of the apparatus according to the invention, whereby this is the case for existing devices in the market, and in a reduction of the purchase cost of bottled water. The electrical consumption is minimal.

In a shower or bath the treated tap water feels more soften, thus reducing the required quantity of soap.

The advantages on technical level include among other things, that only one single installation for a full house or residence suffice; there are no filters to be cleaned or replaced, the device is soundless and contains no moving parts, and there is no direct contact with the treated water. The installation is very simple and the intervention of a plumber or other professional is not required.

The apparatus according to the invention can be mounted on any type of service tubes, regardless if they are in copper, plastic or metal, and regardless their diameter. It takes a minimal space and does not generate strong magnetic fields.

A consequence of the foregoing features is that when the apparatus according to the invention for instance is installed on a domestic water supply, and as such not physically intervenes in the pipe itself, there is no re-examination by the official water supplier required.

**Measurements :**

Following measurements were made with a Gigahertz Solutions ME 3030B measuring device:

    a. Measurements of the electric field strength in V/m
    b. Measurements of the magnetic flux density in nT

The steering unit, as described in claim 2, has, whether or not controlled the mentioned antenna as described in claim 1.

This antenna was packed in the mentioned plastic housing, as described in claim 6. The ME 3030B measurement device was held in 3 different positions against the plastic housing as follows:

    a. Flat on top
    b. Pitched according to one of the sides on the outside
    c. On the inside between the two bevels

Since these measurements were not done in a laboratory environment, it's normal that there is still a small residual value in V/m and a small residual value in nT measured. These values are then considered as baseline.

The electrical measurements show then a significant difference in V/m between the switching on and off of the steering unit. These differences amount to 1300 V/m on the inside and up to 250 V/m (as lowest difference) on the outside.

The magnetic measurements show practically no difference between the on and off status of the steering unit. As such, there is no additional magnetic field measurable around the mentioned antenna.

Conclusion: these measurements show that there is a measurable difference in the electrical field as created by the mentioned antenna, and there is no measurable difference in the magnetic flux.

**Induction :**

The apparatus creates by its construction a strong electrical field on the inside of the mentioned plastic housing, without any magnetic field.

It's on the inside of this housing that the water tube is located.

The impure tap water is a conductor as well.

There arises therefore a capacitive coupling between the antenna, as first electrical conductor, and the water, as second electrical conductor. The plastic housing, the air present and the material of the water pipe wherein the tap water flows, forms then the dielectric.

This capacitive coupling finally enables that the offered information in the first electrical conductor is passed to the second conductor, in casu the water.

As such, we can speak of an induction trough a capacitive coupling of the antenna to the water. This induction has then the already mentioned effects.

For the purpose of the present invention the term induction should be understood to mean an electrical induction trough a capacitive coupling.

**Holes :**

In claim 1 is discussed the practical implementation by means of a classic printed circuit board. This printed circuit board contains also a part whose shape of the pattern is decisive. This shape is fixed by the proper placement of holes. These holes are carried out in practice by electrical conducting connections in the printed circuit board. These electrical conducting connections are passing through holes in the printed circuit board whereby the inside of the holes are metalized. The diameter of these holes can be freely chosen. With very small diameters one speaks of VIA's. These VIA's are as such electrically conductive.

These metalized holes, placed according to the special layout, provide as such the correct electric field pattern as capacitive coupling to the second conductor, in casu the tap water.

As long as the shape is maintained, the size of the shape is of lesser importance.

In other words, the design is scalable in size, but not in form. As such, the size of the holes is of no importance in itself, however the pattern relative to each other does matter.

It's precisely in this form or pattern that the inventive step of the present invention resides.

**Technically measurable result:**

1. A Belgian university has conducted under our commission tests with the complete setup as showed in figure 1.

These tests confirmed that there is no difference in the physicochemical quality of the water. This can be understood as there is no physical impact on the water itself. The calcification test shows that there is measured apparently the same quantity of calc, however, the structure of the calc looks quite different, namely, the treated water has a much more homogeneous calcification.

A taste test amongst 20 students shows that 14 of them tasted a difference between the two waters.

And a test with soya seeds shows a significant difference in the growth pattern of these seeds. This effect cannot be explained by the university.

2. A Belgian doctor has tested 2 tap water samples in a accredited laboratory, whereby one sample was treated during 10 days with the apparatus according to the invention, and the second sample was normal tap water.

The result of the bacteriological test shows that the ATP value in pg/ml is a factor 4,5 times better in the treated water as compared to the non treated water.

3. A German specialized company researched 2 samples of water we sent them. One sample was regular tap water, the other sample was treated tap water.

Their conclusion is that there is a significant measurable difference between both waters on the level of the "plasma discharge", the "glow area" and the "glow intensity".

**Claims**

1.  Apparatus for the treatment of a liquid, comprising a plastic housing for a printed circuit board, positioned alongside a transfer channel for the liquid, said printed circuit board containing two distinct antenna parts for receiving electromagnetic signals from a steering unit, transforming same into electromagnetic inductive signals acting upon the liquid, one antenna part being an antenna in the form of a coil, executed in a meander layout, and another antenna part,
    **characterized in that**
    the other antenna part of the printed circuit board comprises holes, these holes are arranged according to a pattern comprising at least two blocks, each block comprising a matrix of holes arranged in rows and columns, wherein the holes in the rows are positioned at regular distances from one another, wherein the blocks are displaced over one another and wherein the holes are carried out by electrical conducting connections passing through the holes in the printed circuit board whereby the inside of the holes are metalized.

2.  Apparatus according to claim 1, wherein the liquid is water.

3.  Apparatus according to claim 1, wherein the liquid is fuel.

4.  Apparatus according to any of the preceding claims, wherein the plastic housing comprises two parts, each part comprising a printed circuit board that is positioned in the form of a reversed V over a circular transfer channel.

**5.** Apparatus according to any of the preceding claims, wherein the holes in the pattern are circular.

**6.** Apparatus according to any of the preceding claims, wherein the pattern comprises at least three blocks, each block comprising at least three rows and each row comprises at least sixteen holes.

**7.** Apparatus according to any of the preceding claims, wherein the distance between the holes in a row and the distance between holes positioned in rows positioned above each other is the same.

**8.** Apparatus according to any of the preceding claims, wherein the blocks are displaced one over the other at least by a distance of the diameter of a hole.

**9.** Method for the treatment of a liquid using an apparatus according to any of the preceding claims.

**10.** Method according to claim 9, wherein the electromagnetic signals are very-low frequency electromagnetic signals.


**Patentansprüche**

**1.** Vorrichtung zur Behandlung einer Flüssigkeit mit einem Kunststoffgehäuse für eine gedruckte Leiterplatte, die entlang eines Übertragungskanals für die Flüssigkeit positioniert ist, wobei die Leiterplatte zwei unterschiedliche Antennenteile beinhaltet zum Empfangen elektromagnetischer Signale von einer Lenkeinheit, welche selbige in elektromagnetische induktive Signale umwandelt, die auf die Flüssigkeit wirken, wobei ein Antennenteil eine Antenne in Form einer Spule ist, die in einer Mäanderanordnung ausgeführt ist, und ein weiterer Antennenteil **dadurch gekennzeichnet ist, dass** der andere Antennenteil der Leiterplatte Löcher aufweist, welche nach einem Muster angeordnet sind, das mindestens zwei Blöcke aufweist, wobei jeder Block eine Matrix von Löchern aufweist, die in Zeilen und Spalten angeordnet sind, wobei die Löcher in den Zeilen in regelmäßigen Abständen voneinander angeordnet sind, wobei die Blöcke übereinander verschoben und wobei die Löcher durch elektrisch leitende Verbindungen realisiert sind, die durch die Löcher in der Leiterplatte gehen, wobei die Innenseiten der Löcher metallisiert sind.

**2.** Vorrichtung nach Anspruch 1, wobei die Flüssigkeit Wasser ist.

**3.** Vorrichtung nach Anspruch 1, wobei die Flüssigkeit Brennstoff ist.

**4.** Vorrichtung nach einem der vorstehenden Ansprüche, wobei das Kunststoffgehäuse zwei Teile aufweist, wobei jeder Teil eine gedruckte Leiterplatte aufweist, die in Form eines umgekehrten V über einen kreisförmigen Übertragungskanal positioniert ist.

**5.** Vorrichtung nach einem der vorstehenden Ansprüche, wobei die Löcher im Muster kreisförmig sind.

**6.** Vorrichtung nach einem der vorstehenden Ansprüche, wobei das Muster mindestens drei Blöcke aufweist, wobei jeder Block mindestens drei Zeilen umfasst und jede Zeile mindestens sechzehn Löcher aufweist.

**7.** Vorrichtung nach einem der vorstehenden Ansprüche, wobei der Abstand zwischen den Bohrungen in einer Zeile und der Abstand zwischen Bohrungen, die in übereinander angeordneten Zeilen angeordnet sind, derselbe ist.

**8.** Vorrichtung nach einem der vorstehenden Ansprüche, wobei die Blöcke übereinander mindestens um eine Distanz des Durchmessers eines Loches verschoben sind.

**9.** Verfahren zur Behandlung einer Flüssigkeit unter Verwendung einer Vorrichtung nach einem der vorstehenden Ansprüche.

**10.** Verfahren nach Anspruch 9, wobei die elektromagnetischen Signale elektromagnetische Signale von sehr niedriger Frequenz sind.


**Revendications**

**1.** Appareil pour le traitement d'un liquide, comprenant un couvercle en plastique pour une carte de circuit imprimé, positionné le long d'un tuyau de transfert du liquide, ladite carte de circuit imprimé contenant deux parts d'antennes distinctes pour recevoir des signaux électromagnétiques d'une unité de direction, transformant lesdits signaux en des signaux électromagnétiques inductifs agissant sur le liquide, une part d'antenne étant une antenne en forme de bobine, exécuté en schéma méandre, et une autre part d'antenne, **caractérisé en ce que** L'autre part d'antenne de la carte de circuit imprimé contient des trous, lesdits trous sont arrangés selon un patron comprenant au moins deux blocs, chaque bloc comprenant un circuit matrice de trous arrangés selon des rangées et des colonnes, dans lequel les trous dans les rangées sont positionnées à des distances régulières l'une de l'autre, dans lequel les blocs sont décalés l'un par rapport à l'autre et dans lequel les trous sont exécutés par des connections électriquement conductrices passant à travers les trous dans la carte de circuit imprimé dans lequel l'intérieur des trous est métallisé.

2. Appareil selon la revendication 1, dans lequel le liquide est de l'eau.

3. Appareil selon la revendication 1, dans lequel le liquide est du carburant.

4. Appareil selon l'une quelconque des revendications précédentes, dans lequel le couvercle en plastique comprend deux parties, chaque partie comprenant une carte de circuit imprimé positionné en forme de V renversé sur un tuyau de transfert circulaire

5. Appareil selon l'une quelconque des revendications précédentes, dans lequel les trous du patron sont circulaires.

6. Appareil selon l'une quelconque des revendications précédentes, dans lequel le patron comprend au moins trois bloques, chaque bloque comprenant au moins trois rangées et chaque rangée comprenant au moins seize trous.

7. Appareil selon l'une quelconque des revendications précédentes, dans lequel la distance entre les trous dans une rangée et la distance entre les trous positionnés dans des rangées positionnés au-dessus de l'autre est la même.

8. Appareil selon l'une quelconque des revendications précédentes, dans lequel les bloques sont décalés l'un par rapport à l'autre au moins par une distance d'un diamètre d'un trou.

9. Méthode pour le traitement d'un liquide, utilisant un appareil selon l'une quelconque des revendications précédentes.

10. Méthode selon la revendication 9, dans laquelle les signaux électromagnétiques sont des signaux électromagnétiques de fréquence très basse

EP 2 848 591 B1

Fig. 1

Fig. 2

*Fig. 3*

*Fig. 4*

*Fig. 5*

*Fig. 6*

| | |
|---|---|
| *129* | *144* |
| *113* | *128* |
| *97* | *112* |
| *81* | *96* |
| *65* | *80* |
| *49* | *64* |
| *33* | *48* |
| *17* | *32* |
| *1* | *16* |

*Fig. 7*

**EP 2 848 591 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1676815 A
- EP 2364954 A
- EP 2054347 A
- US 20090218225 A
- BE 20130587
- EP 2364954 A1